(19) Europäisches Patentamt

European Patent Office

Office européen des brevets

(11) Veröffentlichungsnummer: **0 241 941**
**A2**

(12) **EUROPÄISCHE PATENTANMELDUNG**

(21) Anmeldenummer: **87105720.4**

(22) Anmeldetag: **16.04.87**

(51) Int. Cl.⁴: **G 01 N 30/26**

(30) Priorität: **16.04.86 DE 3612817**

(43) Veröffentlichungstag der Anmeldung: **21.10.87**
**Patentblatt 87/43**

(84) Benannte Vertragsstaaten: **DE FR GB IT**

(71) Anmelder: **ALEXANDER, Martin Dr.,**
**Wilhelm-Kuhnert-Str. 24, D-8000 München 90 (DE)**

(72) Erfinder: **ALEXANDER, Martin Dr.,**
**Wilhelm-Kuhnert-Str. 24, D-8000 München 90 (DE)**

(74) Vertreter: **Tetzner, Volkmar, Dr.-Ing. Dr. jur.,**
**Van-Gogh-Strasse 3, D-8000 München 71 (DE)**

(54) **Verfahren und Vorrichtung zur Erstellung von Sorptionsisothermen.**

㉗ Die Erfindung betrifft ein Verfahren zur Erstellung von Sorptionsisothermen, wobei eine sorbierbare gasförmige Substanz und ein Sorbens in ein geschlossenes Probengefäß eingebracht werden und jeweils nach Einstellung eines Sorptions-Gleichgewichtes wiederholt aus dem Dampfraum des Probengefäßes eine Gasprobe entnommen und analysiert und das Volumen der entnommenen Gasprobe durch ein entsprechendes Volumen von Inertgas ersetzt wird.

EP 0 241 941 A2

Alx 6132

Verfahren und Vorrichtung zur Erstellung von
Sorptionsisothermen

Für viele technische Zwecke interessiert das Sorptionsverhalten von Stoffen (Sorbentien), d.h. ihre
Bereitschaft zur Aufnahme und Abgabe mobiler Stoffe
(sorbierbarer Substanzen). So stellen beispielsweise
in der Druck- und Verpackungsindustrie Lösungsmittel,
Mineralöle und Weichmacher aus Druckfarben, Lacken,
Klebern und Verpackungsfolien mobile, sorbierbare
Substanzen dar, die vom Verpackungsmaterial (einschließlich dem Füllgut), vom Kleber oder von einem
anderen Sorbens aufgenommen werden. Das Sorptionsverhalten von Stoffen interessiert ferner beispielsweise bei der Herstellung von Druckfarben und Lacken,
bei der Abluftreinigung und in vielen anderen Fällen.

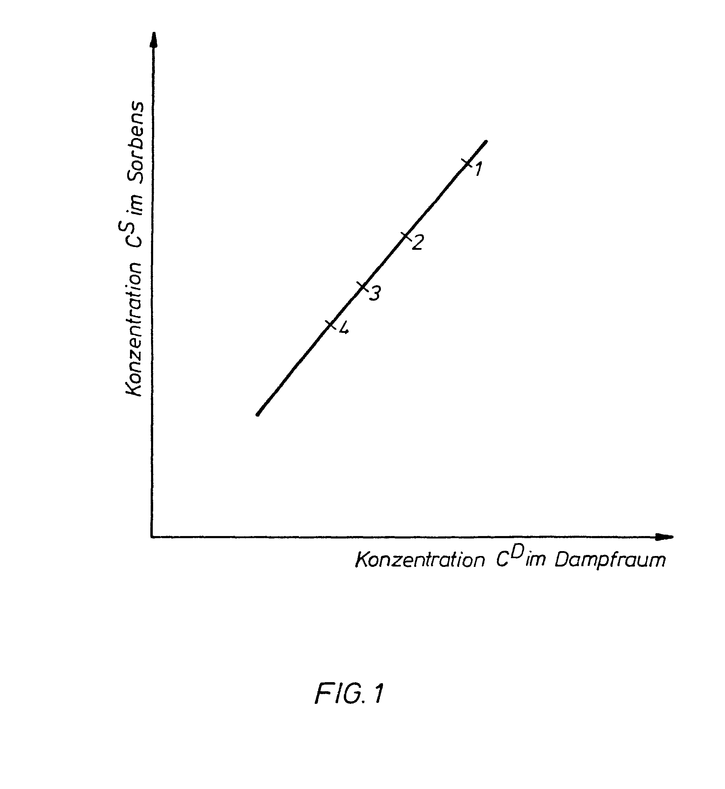

Da das Sorptionsverhalten von Stoffen in aller Regel
stark temperaturabhängig ist, wird es zweckmäßig
anhand sogenannter Sorptionsisothermen beschrieben.
Eine solche Sorptionsisotherme ist in Fig. 1 veranschaulicht. In der Ordinate dieses Diagrammes ist
die Konzentration der sorbierbaren Substanz im Sorbens und in der Abszisse die Konzentration der sorbierbaren Substanz im Dampfraum aufgetragen.

Zur Erstellung einer solchen Sorptionsisotherme
müssen mehrere Wertepaare (von Konzentration im Sorbens und Konzentration im Dampfraum) ermittelt werden. Nach dem bisher bekannten Stand der Technik
ist zu diesem Zweck die Präparation einer entsprechend

./.

großen Zahl von Einzelproben erforderlich, was mit einem hohen Arbeitsaufwand verbunden ist.

Der Erfindung liegt die Aufgabe zugrunde, ein Verfahren zu entwickeln, das eine wesentlich einfachere Erstellung von Sorptionsisothermen gestattet und gewünschtenfalls auch eine Automatisierung der Messung ermöglicht.

Diese Aufgabe wird erfindungsgemäß durch die kennzeichnenden Merkmale des Anspruches 1 gelöst.

Eine zweckmäßige Ausgestaltung des erfindungsgemäßen Verfahrens ist Gegenstand des Anspruches 2. Eine Vorrichtung zur Durchführung des erfindungsgemäßen Verfahrens ist Inhalt des Anspruches 3.

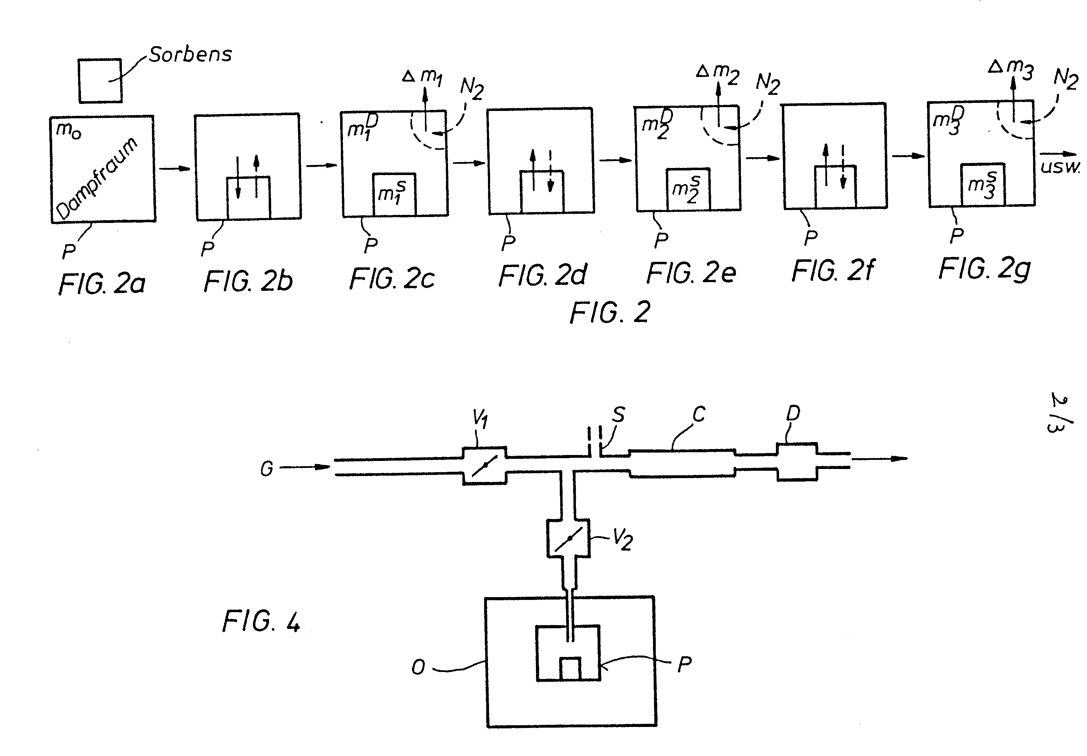

Das Prinzip des erfindungsgemäßen Verfahrens sei zunächst anhand von Fig. 2 erläutert.

Es wird zunächst eine bekannte Menge $m_0$ einer sorbierbaren gasförmigen Substanz (beispielsweise eines Lösungsmittel-Dampfes) bei vorgegebener Temperatur mit einer bekannten Menge eines Sorbens in einem geschlossenen Probengefäß P zusammengebracht (Fig. 2a). Nach einer gewissen Zeitdauer hat sich das Sorptionsgleichgewicht eingestellt (Fig. 2b). Nunmehr wird aus dem Dampfraum des Probengefäßes eine Gasprobe der Menge $\Delta m_1$ entnommen und auf ihren Gehalt an sorbierbarer Substanz analysiert (Fig. 2c). Nach Entnahme der Gasprobe wird in das Probengefäß P unter Konstanthaltung der Temperatur ein dem Volumen der entnommenen Gasprobe entsprechendes Volumen von inertem Gas eingeführt, was in Fig. 2c durch $N_2$ angedeutet ist.

Nach einer gewissen Weile hat sich erneut ein Sorptionsgleichgewicht eingestellt (Fig. 2d). Sodann wird erneut aus dem Dampfraum des Probengefäßes P eine Gasprobe (Menge $\Delta m_2$) entnommen und analysiert und das Volumen der entnommenen Gasprobe durch ein entsprechendes Volumen von inertem Gas ($N_2$) ersetzt (Fig. 2e). In entsprechender Weise wird der beschriebene Vorgang mehrfach wiederholt (Fig. 2f, 2g, usw.).

Bezeichnet man die zu Beginn des Verfahrens in das Probengefäß P eingebrachte bekannte Menge der sorbierbaren gasförmigen Substanz mit $m_0$, so läßt sich die zum Zeitpunkt der ersten Probenahme (Fig. 2c) im Sorbens enthaltene Stoffmenge $m_1^S$ wie folgt errechnen: Es wird zunächst aus der entnommenen Probenmenge $\Delta m_1$ die zur Zeit der ersten Probenahme im Dampfraum befindliche Menge $m_1^D$ sorbierbarer Substanz errechnet. Dann ist die Differenz zwischen der im System befindlichen, bekannten Gesamtmenge $m_0$ sorbierbarer Substanz und der im Dampfraum befindlichen Menge $m_1^D$ sorbierbarer Substanz die zu diesem Zeitpunkt im Sorbens befindliche Menge $m_1^S$ sorbierbarer Substanz.

Die damit bekannten Stoffmengenpaare $m_1^D$ und $m_1^S$ werden in Konzentrationen $c_1^D$ bzw. $c_1^S$ umgerechnet und liefern damit das erste Wertepaar (Punkt 1) der

./.

Sorptionsisotherme gemäß Fig. 1.

Zum Zeitpunkt der nächsten Probenahme (Fig. 2e) beträgt die im System befindliche, bekannte Gesamtmenge sorbierbarer Substanz $m_0 - \Delta m_1$. Aus der bei der zweiten Probenahme entnommenen, durch die Analyse ermittelten Menge $\Delta m_2$ sorbierbarer Substanz errechnet sich die zu diesem Zeitpunkt im Dampfraum befindliche Menge $m_2^D$ sorbierbarer Substanz. Damit ergibt sich die zum Zeitpunkt der zweiten Probenahme im Sorbens befindliche Menge $m_2^S$ sorbierbarer Substanz als $m_0 - \Delta m_1 - m_2^D$.

Durch Umrechnung dieses zweiten Stoffmengenpaares ($m_2^S$ und $m_2^D$) in Konzentrationen ($c_2^S$ und $c_2^D$) ist damit ein weiteres Wertepaar (Punkt 2) der Sorptionsisotherme gemäß Fig. 1 ermittelt. In entsprechender Weise werden beliebig viele weitere Punkte der Sorptionsisotherme gewonnen.

Bei der praktischen Realisierung des erfindungsgemäßen Verfahrens ist es nun zweckmäßig, das Volumen der jeweils entnommenen Gasprobe zu bestimmen bzw. zu überwachen. Zu diesem Zweck wird in das Probengefäß außer der sorbierbaren gasförmigen Substanz auch eine nicht sorbierbare gasförmige Substanz eingeführt. Die dem Dampfraum des Probengefäßes entnommene Gasprobe wird hierbei auch auf ihren Gehalt an nicht sorbierbarer Substanz analysiert.

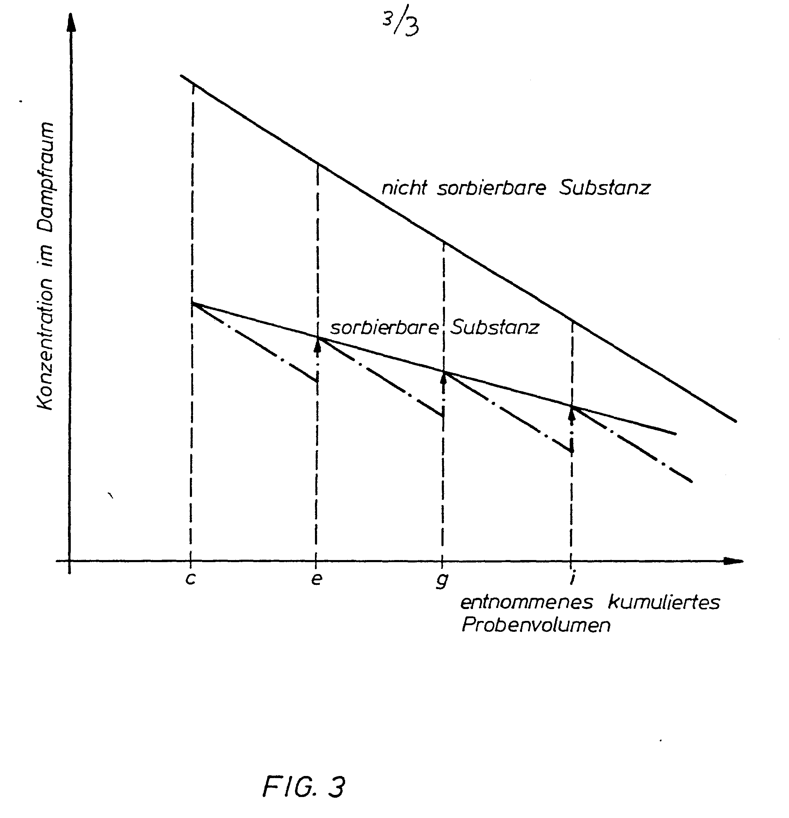

Trägt man nun in einem Diagramm (Fig. 3) in der Ordinate in logarithmischer Darstellung die Konzentration der nicht sorbierbaren Substanz im Dampfraum und in der linear geteilten Abszisse das entnommene kumulierte Probenvolumen auf, so nimmt die Konzentration der nicht sorbierbaren Substanz im Dampfraum längs einer Geraden ab (die Punkte c, e, g und i kennzeichnen dabei die aufeinanderfolgende Entnahme einer jeweils gleich großen Gasprobe).

In das Diagramm gemäß Fig. 3 ist außerdem die Abnahme der Dampfraum-Konzentration der sorbierbaren Substanz eingetragen. Man erkennt, daß diese Gerade flacher verläuft als die Abnahme der Konzentration der nicht sorbierbaren Substanz. Dies erklärt sich damit, daß jeweils nach einer Probenahme aus dem Sorbens sorbierbare Substanz freigesetzt wird und in den Dampfraum übertritt, bis ein neues Sorptionsgleichgewicht erreicht ist (dieser Vorgang ist in Fig. 3 durch die strichpunktierten Linien veranschaulicht).

Eine Vorrichtung zur Durchführung des erfindungsgemäßen Verfahrens ist in Fig. 4 schematisch veranschaulicht. Sie enthält ein geschlossenes Probengefäß P, einen Ofen O zur Konstanthaltung der Temperatur des Probengefäßes P, eine gas-chromatographische Säule C mit Detektor D, ein zwischen dem Probengefäß P und der gas-chromatographischen Säule C angeordnetes Ventil $V_2$ zur Verhinderung von Diffusionsverlusten, ein zwischen einer Inertgasquelle (G) und der gas-chromatographischen Säule C angeordnetes Ventil $V_1$ zur Unterbrechung des Inertgasstromes sowie einen Abzweig S für eine etwaige gewünschte Aufteilung der Gasströmung.

0241941

Die Funktion der Vorrichtung gemäß Fig.4 ist folgendermaßen:

Es werden zunächst abgemessene Mengen eines Sorbens und einer sorbierbaren gasförmigen Substanz sowie eine nicht abgemessene Menge einer nicht sorbierbaren gasförmigen Substanz, d.h. eines Kontrollgases (z.B. Methan), in das Probengefäß P eingebracht. Das Probengefäß P enthält beispielsweise einen Septum-Verschluß.

Das Probengefäß P wird dann in den Ofen O eingeführt und auf Versuchstemperatur gebracht.

Nun wird unter Durchstechen des Septum-Verschlusses das Probengefäß P an die gas-chromatographische Säule C angeschlossen. Durch Einströmen von Inertgas in das Probengefäß wird ein Druckausgleich mit dem übrigen System hergestellt. Nach Erreichen des Druckausgleiches wird das Ventil $V_2$ geschlossen, um eine Diffusion aus dem Probengefäß P zu verhindern.

Nach einer gewissen Wartezeit bis zum Erreichen der Gleichgewichtseinstellung wird das Ventil $V_2$ geöffnet und das Ventil $V_1$ geschlossen. Damit wird eine Gasprobe dem Probengefäß P entnommen und der gas-

./.

chromatographischen Säule C zugeführt. Nach einer definierten Zeit wird das Ventil $V_1$ wieder geöffnet, so daß im Probengefäß P das entnommene Probenvolumen durch Inertgas ersetzt wird. Dieser Vorgang ist beendet, wenn wieder Druckausgleich erreicht ist. Daraufhin wird das Ventil $V_2$ geschlossen. Die entnommene Probe wird durch die gas-chromatographische Säule C und den Detektor D analysiert.

Hat sich nach einer gewissen Wartezeit im Probengefäß P ein neues Sorptionsgleichgewicht eingestellt, so wiederholt sich der geschilderte Vorgang: durch Schließen des Ventiles $V_1$ und Öffnen des Ventiles $V_2$ wird eine Gasprobe entnommen und durch ein gleiches Volumen von Inertgas ersetzt.

In der obigen Beschreibung wurde angenommen, daß in das Probengefäß eine sorbierbare gasförmige Substanz eingebracht wird. Selbstverständlich ist es jedoch im Rahmen der Erfindung auch möglich, die sorbierbare gasförmige Substanz durch Verdampfen einer Flüssigkeit (innerhalb oder außerhalb des Probengefäßes) zu erzeugen.

Patentansprüche:

1. Verfahren zur Erstellung von Sorptionsisothermen, gekennzeichnet durch folgende Verfahrensschritte:

a) eine bekannte Menge einer sorbierbaren gasförmigen Substanz wird in einem geschlossenen Probengefäß bei vorgegebener Temperatur mit einer bekannten Menge eines Sorbens zusammengebracht;

b) nach Einstellung eines Gleichgewichts wird aus dem Dampfraum des Probengefäßes eine Gasprobe entnommen und auf ihren Gehalt an sorbierbarer Substanz analysiert;

c) nach Entnahme der Gasprobe wird in das Probengefäß unter Konstanthaltung der Temperatur ein dem Volumen der entnommenen Gasprobe entsprechendes Volumen von Inertgas eingeführt;

d) jeweils nach Einstellung eines neuen Gleichgewichts wird sodann wiederholt aus dem Dampfraum des Probengefäßes eine Gasprobe entnommen und analysiert und das Volumen der entnommenen Gasprobe durch ein entsprechendes Volumen von Inertgas ersetzt;

e) zur Ermittlung der einzelnen Wertepaare einer Sorptionsisotherme (z.B. Konzentration $c_2^S$ im Sorbens und Konzentration $c_2^D$ im Dampfraum) wird

./.

die jeweils im Sorbens befindliche Menge (z.B. $m_2^S$) sorbierbarer Substanz als Differenz zwischen der vor einer Probenahme im System befindlichen, bekannten Gesamtmenge $(m_0 - \Delta m_1)$ sorbierbarer Substanz und der durch die jeweilige Probenahme ermittelten, im Dampfraum befindlichen Menge $(m_2^D)$ sorbierbarer Substanz errechnet.

2. Verfahren nach Anspruch 1, gekennzeichnet durch folgende weitere Verfahrensschritte:

f) in das Probengefäß wird auch eine nicht sorbierbare gasförmige Substanz eingeführt;

g) die dem Dampfraum des Probengefäßes entnommene Gasprobe wird auch auf ihren Gehalt an nicht sorbierbarer Substanz analysiert;

h) die aus den Analysenwerten ermittelte Abnahme der Konzentration nicht sorbierbarer Substanz wird zur Bestimmung und/oder Überwachung des Volumens der entnommenen Gasproben verwendet.

3. Vorrichtung zur Durchführung des Verfahrens nach Anspruch 1, gekennzeichnet durch folgende Bauteile:

a) ein Probengefäß P,

b) eine Einrichtung (O) zur Konstanthaltung der Temperatur des Probengefäßes (P),

./.

c) eine gas-chromatographische Säule (C) mit Detektor (D),

d) ein zwischen dem angeschlossenen Probengefäß (P) und der gas-chromatographischen Säule (C) angeordnetes schaltbares Ventil (V$_2$) zur Verhinderung von Diffusionsverlusten,

e) ein zwischen einer Inertgasquelle (G) und der gas-chromatographischen Säule (C) angeordnetes schaltbares Ventil (V$_1$) zur Unterbrechung des Inertgasstromes.

FIG. 1

FIG. 2a    FIG. 2b    FIG. 2c    FIG. 2d    FIG. 2e    FIG. 2f    FIG. 2g

FIG. 2

FIG. 4

2/3

0241941

FIG. 3